# EUROPÄISCHE PATENTANMELDUNG

(11) **EP 2 177 138 A1**
(43) Veröffentlichungstag der Anmeldung: **21.04.2010**
(21) Anmeldenummer: 09170829.7
(22) Anmeldetag: 21.09.2009
(51) Int. Cl.: A47J 31/54

(54) **Getränkeautomat**

(30) Priorität: 17.10.2008 DE 102008052190
(71) Anmelder: WMF WÜRTTEMBERGISCHE METALLWARENFABRIK AG, 73309 Geislingen/Steige (DE)
(72) Erfinder: Albert, Heinz, 89150, Laichingen (DE); Casado Gomez, Sebastian, 70329, Stuttgart (DE); Gussmann, Jochen, 73527, Schwäbisch-Gmünd (DE); Heim, Michael, 73340, Amstetten (DE); Kiefer, Alexander, 73329, Kuchen (DE); Ostowski, Manfred, 73312, Geislingen/Steige (DE); Startz, Armin, 89197, Weidenstetten (DE)
(74) Vertreter: BRP Renaud & Partner

(57) **Zusammenfassung**

Die vorliegende Erfindung betrifft einen Getränkeautomat mit einer Heizeinrichtung zum Erhitzen einer Flüssigkeit und mit wenigstens einem elektrischen Akkumulator zur Energieversorgung des Getränkeautomatens, insbesondere der Heizeinrichtung desselben, der eine im Vergleich zur Ladeleistung höhere Entladeleistung aufweist, die größer als 500 Watt ist.

## Beschreibung

Die vorliegende Erfindung betrifft einen Getränkeautomaten mit einer Heizeinrichtung zum Erhitzen einer für die Zubereitung des Getränks erforderlichen Flüssigkeit.

Getränkeautomaten, wie beispielsweise Kaffeemaschinen, werden üblicherweise mittels eines Netzgerätes mit einem elektrischen Netz, beispielsweise einem 230 V-Spannungsnetz, zur Versorgung mit elektrischer Energie verbunden. Durch die Verbindung des Getränkeautomatens mit einem derartigen Spannungsnetz steht genügend elektrische Leistung zum Betrieb der Heizeinrichtung zur Verfügung. Soll ein Getränkeautomat, beispielsweise eine Kaffeemaschine, jedoch autark von einem Stromnetz betrieben werden, so sind hierfür Batterien oder elektrische Akkumulatoren vorzusehen, welche die Versorgung des Getränkeautomatens mit elektrischer Energie übernehmen. Bei einem Betrieb des Getränkeautomatens über den elektrischen Akkumulator, ist aufgrund der Leistung derartiger Akkumulatoren die Heizleistung des Getränkeautomatens jedoch stark eingeschränkt, wodurch sich entsprechend lange Aufheiz- bzw. Brühzeiten ergeben.

Die vorliegende Erfindung beschäftigt sich mit dem Problem, einen Getränkeautomaten anzugeben, mit welchem ein von einem elektrischen Stromnetz autarker, aber dennoch komfortabler Betrieb möglich ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, einen Getränkeautomaten mit einer Heizeinrichtung zum Erhitzen einer für die Zubereitung des Getränks erforderlichen Flüssigkeit mit zumindest einem elektrischen Akkumulator zur Energieversorgung auszustatten, dessen Entladeleistung deutlich höher ist als dessen Ladeleistung. Dieses bedeutet konkret, dass der wenigstens eine elektrische Akkumulator schonend und mit geringerer Leistung über längere Zeit aufgeladen werden kann, beim Betrieb des Getränkeautomatens, insbesondere beim Betrieb der Heizeinrichtung des Getränkeautomatens, jedoch eine so hohe Entladeleistung abgibt, dass die Heizeinrichtung vorzugsweise mit derselben Leistung betrieben werden kann, wie dies bei einem Anschluss des Getränkeautomatens an ein herkömmliches 230 V-Spannungsnetz der Fall ist. Die Ladeleistung beträgt dabei vorzugsweise 50 Watt, während die Entladeleistung mehr als 500 Watt, vorzugsweise 1.000 - 2.000 Watt, beträgt. Die in dem wenigstens einen elektrischen Akkumulator gespeicherte elektrische Energie kann somit über einen kurzen Zeitraum, das heißt insbesondere während der Heiz- und/oder Brühphase, aus dem elektrischen Akkumulator in entsprechender Höhe abgezogen werden, so dass der Heizvorgang bzw. Brühvorgang im Akkumulatorbetrieb vorzugsweise nicht länger dauert, als im alternativen Netzbetrieb. Durch die im Vergleich zur Entladeleistung deutlich geringere Ladeleistung, kann der wenigstens eine elektrische Akkumulator zudem besonders schonend aufgeladen werden, wodurch eine hohe Lebenserwartung des Akkumulators erreicht werden kann. Insbesondere kann hierdurch der Getränkeautomat im Akkumulatorbetrieb ohne Komforteinbußen bezüglich einer Herstellungsgeschwindigkeit des Getränkes betrieben werden.

Bei einer vorteilhaften Weiterbildung der erfindungsgemäßen Lösung, ist der wenigstens eine elektrische Akkumulator in den Getränkeautomaten integriert. Denkbar ist selbstverständlich auch, dass ein derartiger elektrischer Akkumulator als separates Zusatzteil angeboten bzw. vertrieben wird. Eine Integration des wenigstens einen elektrischen Akkumulators in dem Getränkeautomaten bietet jedoch den Vorteil, dass dieser beispielsweise bei einem Netzbetrieb des Getränkeautomatens parallel aufgeladen werden kann, wobei das Netzgerät des Getränkeautomatens zugleich als Ladeeinrichtung für den elektrischen Akkumulator dienen kann. Selbstverständlich ist dabei auch denkbar, dass die Ladeeinrichtung derart ausgebildet ist, dass auch bei einem länger andauernden Netzbetrieb des Getränkeautomatens ein schädigendes Überladen des Akkumulators vermieden wird, so dass der Ladestrom nach Erreichen einer bestimmten Aufladeleistung automatisch unterbrochen wird. Die Integration des wenigstens einen elektrischen Akkumulators bietet darüber hinaus designerische Vorteile und schafft zudem einen Getränkeautomaten, welcher wahlweise entweder im Netzbetrieb oder im Akkumulatorbetrieb betrieben werden kann. Generell kann dabei die Ladeeinrichtung derart ausgebildet sein, dass diese alternativ an 230 V-Spannungsnetz, an ein 110 V-Spannungsnetz oder an ein 12 V-Spannungsnetz, beispielsweise an einer Autobatterie oder einer Lichtmaschine, angeschlossen werden kann. Die Umschaltung zwischen den unterschiedlichen Spannungen kann dabei entweder automatisch durch die Ladeeinrichtung selbst erfolgen, so dass sich diese automatisch an das jeweilige Spannungsangebot anpasst oder aber mittels geeigneter Schalter, wie sie beispielsweise von herkömmlichen Rasierern bekannt sind.

Bei einer vorteilhaften Ausbildung der erfindungsgemäßen Lösung, ist die Ladeeinrichtung als Windrad oder als Solarzelle ausgebildet. Denkbar ist auch, dass der erfindungsgemäße Getränkeautomat ausschließlich mit dem wenigstens einen elektrischen Akkumulator betrieben werden kann, so dass keine zusätzliche und alternativ wählbare Anbindung an ein elektrisches Netz zur Verfügung steht. Zum Aufladen des elektrischen Akkumulators kann dabei eine, beispielsweise in der Art eines Windrades oder einer Solarzelle ausgebildetes Ladeeinrichtung mit dem elektrischen Akkumulator verbunden werden, so dass der Getränkeautomat insbesondere im Freien, beispielsweise bei einem Campingurlaub, bei welchem oftmals kein direkter Stromanschluss zur Verfügung steht, problemlos betrieben werden kann.

Bei einer weiteren vorteilhaften Ausführungsform der erfindungsgemäßen Lösung, ist die Heizeinrichtung als Durchlauferhitzer, insbesondere als Blankdrahtheizung, ausgebildet. Für das schnelle Aufwärmen von Flüssigkeiten, beispielsweise von Wasser, ist eine entsprechend große elektrische Leistung erforderlich. Üblicherweise besitzen dabei derartige Durchlauferhitzer einen sogenannten Differenzdruckschalter, welcher einen Druckabfall in einer Wasserleitung hinter dem Durchlauferhitzer erkennt und diesem elektrische Energie zuführt, sobald ein Flüssigkeitsdurchfluss durch den elektrischen Durchlauferhitzer erkannt wird. Im Unterschied zu sogenannten Boilern oder Heißwasserspeichern, benötigt der Durchlauferhitzer nur im Moment des Erhitzens elektrische Energie, dafür jedoch kurzfristig relativ viel davon. Ist ein Erhitzungs- bzw. Brühvorgang im Getränkeautomaten beendet, so wird die Energiezufuhr zur Heizeinrichtung abrupt unterbrochen. Derartige Durchlauferhitzer ermöglichen es, Flüssigkeiten, wie insbesondere Wasser, schnell auf die gewünschte Temperatur zu erhitzen, wofür sie jedoch kurzfristig eine extrem hohe Energiezufuhr benötigen. Aus diesem Grund weist der erfindungsgemäße Getränkeautomat einen elektrischen Akkumulator auf, der eine sehr hohe Entladeleistung, beispielsweise zum Betrieb eines derartigen Durchlauferhitzers, zumindest kurzzeitig zur Verfügung stellen kann. Der elektrische Akkumulator ermöglicht es dabei, die für einen derartigen kurzzeitigen Betrieb erforderliche hohe Entladeleistung bereitzustellen und dies vorzugsweise mehrfach hintereinander. Trotzdem kann die im elektrischen Akkumulator gespeicherte elektrische Energie langfristig gespeichert werden und gegebenenfalls über entsprechende Ladeeinrichtungen wieder erneuert werden. Prinzipiell kann dadurch mit dem erfindungsgemäßen elektrischen Akkumulator ein äußerst komfortabler Betrieb des Getränkeautomatens, welcher beispielsweise als Kaffeemaschine ausgebildet sein kann, ermöglicht werden, und dies insbesondere in einem autarken, das heißt von einem üblichen Stromnetz getrennten, Zustand. Durch die im Vergleich zur Entladeleistung deutlich geringere Ladeleistung, ist darüber hinaus eine schonende Aufladung des Akkumulators möglich, wodurch dieser eine hohe Lebenserwartung aufweist.

Selbstverständlich kann dabei der Akkumulator in den Getränkeautomaten integriert oder räumlich von diesem getrennt, das heißt separat zu diesem angeordnet sein.

## Patentansprüche

1. Getränkeautomat mit einer Heizeinrichtung zum Erhitzen einer Flüssigkeit und mit wenigstens einem elektrischen Akkumulator zur Energieversorgung des Getränkeautomatens, insbesondere der Heizeinrichtung desselben, der eine im Vergleich zur Ladeleistung höhere Entladeleistung aufweist, die größer als 500 Watt ist.

2. Getränkeautomat nach Anspruch 1,
**dadurch gekennzeichnet,**
**dass** der wenigstens eine Akkumulator in den Getränkeautomaten integriert, bevorzugt entnehmbar integriert, ist.

3. Getränkeautomat nach Anspruch 1 oder 2,
**dadurch gekennzeichnet,**
**dass** eine Ladeeinrichtung zum Aufladen des Akkumulators vorgesehen ist.

4. Getränkeautomat nach Anspruch 3,
**dadurch gekennzeichnet,**
**dass** die Ladeeinrichtung als Netzteil zum Anschluss an ein Hochspannungsnetz, bevorzugt 230V- Spannungsnetz oder an ein Niederspannungsnetz, bevorzugt 12V-Spannungsnetz ausgebildet ist.

5. Getränkeautomat nach Anspruch 3,
**dadurch gekennzeichnet,**
**dass** die Ladeeinrichtung als Windrad, Wasserrad, Peltierelement oder als Solarzelle ausgebildet ist.

6. Getränkeautomat nach einem der Ansprüche 1 bis 5,
**dadurch gekennzeichnet,**
**dass** der Getränkeautomat als Kaffeemaschine, Teewassermaschine oder Wasserkocher ausgebildet ist.

7. Getränkeautomat nach einem der Ansprüche 1 bis 6,
**dadurch gekennzeichnet,**
**dass** die Heizeinrichtung als Durchlauferhitzer, insbesondere als Blankdrahtheizung, ausgebildet ist.
